# EUROPÄISCHE PATENTSCHRIFT

(11) **EP 0 310 704 B1**
(45) Veröffentlichungstag und Bekanntmachung des Hinweises auf die Patenterteilung: **01.06.1994**
(21) Anmeldenummer: 87116213.7
(22) Anmeldetag: 04.11.1987
(51) Int. Cl.: C08G 18/10, C08G 18/38, C09J 201/10, C08L 75/04, C08K 3/00

(54) **Reaktiver, thixotropierter Schmelzklebstoff auf Silan-Basis**
Reactive thixotropic hot-melt adhesive based on silane
Colle thixotrope fusible et réactive contenant un silane

(30) Priorität: 09.10.1987 CH 3964/87
(43) Veröffentlichungstag der Anmeldung: 12.04.1989
(73) Patentinhaber: Sika AG, vorm. Kaspar Winkler & Co., CH-8048 Zürich (CH)
(72) Erfinder: Merz, Peter W., Dr., CH-8803 Rüschlikon (CH); Zabel, Lutz-Dieter, CH-8903 Birmensdorf (CH)
(74) Vertreter: Blum, Rudolf Emil Ernst

(56) Entgegenhaltungen:
- EP-A- 0 202 491
- EP-A- 0 210 444
- DE-A- 2 359 929
- DE-C- 1 805 693
- DE-C- 2 359 923
- DE-C- 2 360 019
- US-A- 3 991 025
- US-A- 4 204 010
- US-A- 4 794 139
- CHEMICAL ABSTRACTS, Band 102, Nr. 12, März 1985, Seite 37, Zusammenfassung Nr. 96632f, Columbus, Ohio, US; & JP-A-59 172 573

## Beschreibung

Die vorliegende Erfindung betrifft einen reaktiven thixotropierten Schmelzklebstoff, der reaktionsfähige Gruppen enthält, die beim Kontakt mit Wasser eine Vernetzung des reaktiven Schmelzklebstoffes unter Erlangung gummielastischer Eigenschaften bewirken. Vor seiner Vernetzung mit Wasser ist der erfindungsgemässe reaktive Schmelzklebstoff bei Umgebungstemperatur jedoch noch zähplastisch verformbar.

### BESCHREIBUNG DES STANDES DER TECHNIK

Seit langem sind Schmelzklebstoffe, also sogenannte Hot-melts auf Basis von thermoplastischen Materialien bekannt. Diese werden vor ihrem Auftragen erhitzt, beispielsweise auf 90 - 200°C, unter Verwendung einer entsprechenden Vorrichtung, beispielsweise einer Schmelzpistole, und in geschmolzenem Zustand auf die zu verklebenden Substrate aufgetragen. Beim Erkalten erstarren diese thermoplastischen Massen und bilden so rasch eine feste Verklebung.

Das schnelle Verfestigen und das Fehlen von Wasser und Lösungsmitteln bevorteilen diese Schmelzkleber gegenüber anderen Klebstoffsystemen.

Als ein Nachteil hat sich ihr thermoplastisches Verhalten erwiesen, da ihre mechanischen und somit haftenden Eigenschaften stark temperaturabhängig sind. Bei erhöhter Temperatur erweichen sie wieder und neigen bei tiefer Temperatur zur Versprödung, weshalb sie nur in einem eher engen Temperaturbereich eingesetzt werden.

In den letzten Jahren sind reaktive Polyurethanen-Schmelzklebstoffe auf dem Markt eingeführt worden. Diese zeichnen sich dadurch aus, dass sie nach Vernetzung ihre Thermoplastizität verlieren und gute mechanische Eigenschaften in einem breiten Temperaturbereich liefern. Die Vernetzung der reaktiven Isocyanatgruppen kann mittels Wasser, insbesondere Luftfeuchtigkeit, oder durch eine durch Wärme freigesetzte H-aktive Verbindung erfolgen.

Die bekannten lösungsmittelfreien, feuchtigkeitshärtenden präpolymeren Isocyanate sind bei Raumtemperatur flüssig bis weich-wachsähnlich und haben aufgrund ihrer niedrigen Anfangsfestigkeit und der langen Reaktionszeit nur begrenzte Einsatzmöglichkeiten.

Aus dar DE-PS 24 01 320 sind isocyanathaltige Schmelzkleber bekannt, welche zusammengesetzt sind aus:
a) 20 bis 73 Gew.-% eines Urethan-Präpolymeren mit terminalen Isocyanat-Gruppen der beiden Enden,
b) 2 bis 25 Gew.-% eines thermoplastischen Polymeren aus der Gruppe der Aethylen-Vinylacetat-Copolymeron, der Aethylen-Acrylsäure-Copolymeren, der Aethylen-Acrylat-Copolymeren, des ataktischen Polypropylens und der linearen Polyäthylenterephthalat-Polymeren sowie
c) 25 bis 55 Gew.-% eines klebrigmachenden Harzes wie Kolophoniumderivate oder Terpenphenol-Copolymere.

Gemische aus diesen Komponenten neigen aber bei bestimmten Mischungsverhältnissen zur Unverträglichkeit und zur Instabilität der Schmelzen und besitzen ungenügende Standfestigkeiten. Ebenfalls ist ihre Lagerstabilität oft nicht ausreichend.

In der DE-OS 32 36 313 sind reaktive Schmelzkleber beschrieben, welche verträgliche, schmelzstabile, unter Luftfeuchtigkeitsausschluss lagerstabile Mischungen darstellen und eine grosse Anfangshaftfestigkeit und eine hohe Thermostabilität aufweisen. Diese reaktiven Schmelzkleber wurden entwickelt für die Verklebung von thermoplastischen und duroplastischen Kunststoffen, Schaumstoffen, lackierten Oberflächen, Holz, Papier, Leder, Gummi, Textilien, Metalle, usw. und bestehen aus einer Mischung aus:
a) 20 bis 90 Gew.-% eines präpolymeren Isocyanats,
b) 0 bis 75 Gew.-% eines thermoplastischen Polyurethans
   sowie
c) 5 bis 50 Gew.-% eines niedrigmolekularen Kunstharzes aus der Gruppe der Ketonharze und/oder Keton-Aldehyd-Kondensationsharze und/oder Hydrierungsprodukte von Acetophenon-Kondensationsharzen.

Diese reaktiven Schmelzkleber mit den oben angegebenen Mischungsmöglichkeiten sind beim Auftrag wenig standfest - d.h. eine Auftragsdicke von mehr als 2 mm kann nicht gewährleistet werden -,stark klebrig und fädig, und nach Abkühlung zäh und schlecht plastisch verformbar. Ihr Einsatz ist somit auf bestimmte Anwendungsgebiete begrenzt.

Die erwähnten Nachteile dieses reaktiven Schmelzklebstoffes, der bei Kontakt mit Wasser aufgrund der in ihm enthaltenen freien Isocyanatgruppen vernetzt, werden durch den reaktiven Schmelzklebstoff behoben, der in der nicht zum Stande der Technik gehörenden, am 11. November 1987 unter der Nr. 0 244 608 veröffentlichten europäischen Patentanmeldung 87 104 140 beschrieben ist. Der in dieser europäischen Patentveröffentlichung beschriebene reaktive Schmelzklebstoff ist nach dem Abkühlen auf Umgebungstemperatur noch plastisch verformbar. Er enthält freie Isocyanatgruppen und vernetzt beim Kontakt mit Wasser, beispielsweise Luftfeuchtigkeit, unter Erlangung gummielastischer bis zähelastischer Eigenschaften. Aufgrund der guten Standfestigkeit dieses reaktiven Schmelzklebstoffes nach dem Auftragen und vor seiner Vernetzung mit Wasser, ist er für sehr viele Anwendungsgebiete geeignet, insbesondere im Bereich der Autoindustrie, beispielsweise für das Einkleben von Windschutzscheiben (siehe Seite 2, Zeilen 46 - 53 dieser Patentveröffentlichung).

Diese erwünschten Eigenschaften des in der europäischen Patentveröffentlichung 0 244 608 beschriebenen reaktiven Schmelzklebstoffe werden dadurch erreicht, dass man dem reaktiven Schmelzklebstoff wenigstens ein Thixotropierungsmittel einverleibt, vorzugsweise eines ausgewählt aus der Gruppe bestehend aus Bentonen, Russ, Kieselsäurederivaten, gefällten Kreiden und Harnstoffderivaten. Die Thixotropierungsmittel verleihen dem entsprechenden reaktiven Schmelzklebstoff auf Basis eines Gemisches aus wenigstens einem thermoplastischen Material und wenigstens einem Bindemittel auf Isocyanatbasis, das in solchen Mengen anwesend sein muss, dass der Isocyanatgehalt, bezogen auf den gesamten Schmelzklebstoff, im Bereich von 0,01 bis 10 Gew.-% liegt, die erwünschte Standfestigkeit nach dem Auftragen auf das Substrat, sodass dieser reaktive Schmelzklebstoff mit Hilfe eines Extruders zu einem Profil beliebiger Form aufgetragen werden kann. Nach dem Abkühlen auf Raumtemperatur ist dieser noch nicht vernetzte plastisch verformbare Schmelzklebstoff anfassbar, allenfalls kann das extrudierte Profil, beispielsweise in Form von Schnüren, wasserdicht verpackt werden und ist in dieser Form lagerungsfähig, während nach der Entfernung der reaktiven Schnüre aus der wasserdichten Verpackung zur Durchführung des Klebevorgangs die Vernetzung mit der Luftfeuchtigkeit beginnt und schliesslich die gummielastischen bis zähelastischen haftenden Eigenschaften des so erzeugten Verbundes erzielt werden.

Der dort beschriebene Schmelzklebstoff mit reaktiven Isocyanatgruppen enthält vorzugsweise ein Gemisch aus
- 20 bis 90 Gew.-%, insbesondere 50 bis 65 Gew.-%, wenigstens einem thermoplastischen Material,
- 5 bis 40 Gew.-%, insbesondere 15 bis 30 Gew.-%, wenigstens einem Bindemittel auf Isocyanatbasis,
und
- 3 bis 30 Gew.-%, insbesondere 8 bis 20 Gew.-%, wenigstens einem Thixotropiermittel.

Sein Isocyanatgehalt liegt vorzugsweise im Bereich von 0,1 bis 1 Gew.-%, insbesondere im Bereich von 0,3 bis 0,7 Gew.-%. Zusätzlich können in diesem Schmelzklebstoffen wenigstens ein Weichmacher, wenigstens ein Füllstoff und wenigstens ein Zusatzstoff, wie Haftvermittler und Katalysatoren enthalten sind.

Der Nachteil dieses reaktiven Schmelzklebstoffes auf Basis von freien Isocyanatgruppen besteht darin, dass aufgrund der toxischen Eigenschaften des Isocyanates Bedenken bezüglich einer gesundheitlichen Gefährdung der Personen, die derartige Produkte verarbeiten, bestehen.

Ziel der vorliegenden Erfindung war es, einen reaktiven thixotropierten Schmelzklebstoff zu entwickeln, der die oben erwähnten technologischen Vorteile des in der europäischen Patentveröffentlich 0 244 680 beschriebenen reaktiven Schmelzklebstoffe aufrechterhält, jedoch keinen Gehalt an freien Isocyanatgruppen aufweist. Es zeigte sich, dass diese Ziel dadurch erreicht werden kann, indem man einen reaktiven Schmelzklebstoff nach den gleichen Prinzipien aufbaut, die in der europäischen Patentveröffentlichung 0 244 608 beschrieben sind, wobei jedoch in diesem reaktiven Schmelzklebstoff als reaktive Gruppierungen die bei Kontakt mit Wasser eine Vernetzung unter Erreichung der gummielastischen bis zähelastischen Eigenschaften gewährleisten, Di- oder Trialkoxysilylgruppen verwendet werden.

Feuchtigkeitshärtende Gemische, in welchen die Vernetzung aufgrund einer Reaktion von Alkoxysilylgruppen mit Wasser erfolgt, sind aus dem Stande der Technik bereits bekannt.

In der europäischen Patentveröffentlichung 0 202 491 wird ein feuchtigkeitshärtendes Polyestergemisch beschrieben, in welchem die reaktiven, bei Einwirkung von Wasser vernetzenden Gruppierungen, Urethansilyl-Harnstoffgruppen sind. Die Polyester dieses Gemisches werden erhalten, indem man ein Gemisch aus noch freie Hydroxylgruppen aufweisenden Polyestern, die Polykondensationsprodukte aus Di-, beziehungsweise Polycarbonsäuren mit Di- oder Polyolen sind, durch Umsetzung mit Isocyanaten und Aminosilanen, beziehungsweise Mercaptosilanen in die entsprechenden Produkte mit Urethansilylharnstoffgruppen umwandelt (siehe Seite 6, Zeile 20 bis Seite 8, Zeile 25 dieser Patentveröffentlichung).

Die dort beschriebenen reaktiven Schmelzklebstoffe sind bei Temperaturen unter 150° C auftragbar. Sie weisen nach ihrer Abkühlung auf Raumtemperatur sehr elastische Eigenschaften auf und sie verlieren nach der Aushärtung mit Luftfeuchtigkeit diese Elastizität nicht (siehe Seite 4, Zeilen 11 - 18 dieser Patentveröffentlichung). Die dort angestrebte hohe Elastizität des Schmelzklebstoffes vor dessen Aushärtung wird dadurch erreicht, dass in dem Schmelzklebstoff eine Mischung aus unterschiedlichen Polyestern eingesetzt wird, die
a) einen bei Raumtemperatur festen amorphen Polyester mit einer Glasumwandlungstemperatur, die vorzugsweise über der Raumtemperatur liegt, und
b) einen bei Raumtemperatur flüssigen Polyester mit einer sehr tiefen Glasumwandlungstemperatur
   enthält.

In der europäischen Patenveröffentlichung Nr. 0 210 444 werden bei Zimmertemperatur durch Feuchtigkeit vulkanisierbare Polyurethanpolymere beschrieben, welche Dialkoxysilangruppen oder Diaryloxysilangruppen als mit Wasser vernetzende Endgruppierungen aufweisen. Die dort beschriebenen Polyurethanpolymeren haben, im Vergleich zu entsprechenden Polymermaterialien, deren Endgruppierungen nicht Dialkoxysilangruppen sondern Trialkoxysilangruppen sind, im vulkanisierten Zustand eine verbesserte Dehnung und Elastizität, sodass die entsprechenden Produkte als wasserdichte Abdichtungsmittel in Expansionsfugen eingesetzt werden können, wo die entsprechenden Abdichtungsmaterialien während ihrer Verwendung sehr starken Dehnungen und Kontraktionen von ± 50% unterworfen sind, beispielsweise im Hochbau bei der Errichtung von Hochhäusern, beziehungsweise in anderen Anwendungsgebieten, wo starke Dehnungen und Flexibilitäten erforderlich sind, wie zum Beispiel bei Beschichtungsmaterialien, Haftmitteln und Schlichtemitteln für Fasern (siehe Seite 2, Zeilen 1 - 23 dieser Patentveröffentlichung).

Die entsprechenden vulkanisierbaren Polyurethanpolymeren können, gelöst in einem Lösungsmittel, verwendet werden, das unter den Härtungsbedingungen flüchtig ist, oder sie können ohne Lösungsmittel eingesetzt werden, wobei im zuletzt genannten Fall die Viskosität nicht zu hoch sein soll (siehe Seite 8, Zeile 23 bis Seite 9, Zeile 8 dieser Patentveröffentlichung). Der entsprechenden Patentveröffentlichung ist kein Hinweis zu entnehmen, dass die Möglichkeit besteht, die dort beschriebenen reaktiven Polyurethanpolymeren als Schmelzklebstoff zu verwenden, und es kann auch kein Hinweis entnommen werden, dass die entsprechenden noch nicht mit Wasser vernetzten Produkte bei Umgebungstemperatur zähplastisch verformbar sein sollen. Auf Seite 14, Zeilen 1 - 6 dieser Patentveröffentlichung wird jedoch darauf hingewiesen, dass die entsprechenden Produkte vor deren Kontakt mit Wasser offensichtlich klebrig sind, jedoch bei der Vernetzung mit Wasser in relativ kurzer Zeit nicht mehr klebrig werden.

Allenfalls können die dort beschriebenen Produkte noch verschiedene weitere Zusätze enthalten, wie zum Beispiel Weichmacher, UV-Stabilisatoren, Oxydationsinhibitoren oder dielektrische Substanzen, wie Graphit oder Russ oder auch übliche Füllstoffe, wie Siliciumdioxidenthaltende Produkte, beispielsweise Rauchkieselsäure, verschiedene Metalloxyde, und fasrige Füllstoffe, wie Asbestfasern oder Glasfasern (siehe Seite 12, Zeile 20 bis Seite 13, Zeile 15).

Der entsprechenden Patentveröffentlichung ist jedoch nirgends ein Hinweis zu entnehmen, dass die dort beschriebenen Produkte allenfalls auch ein Thixotropierungsmittel enthalten können.

Ziel der vorliegenden Erfindung war es, einen reaktiven thixotropierten Schmelzklebstoff zu entwickeln, der aufgrund seines Gehaltes an einem Thixotropierungsmittel beim Extrudieren standfest ist, vor seiner Vernetzung mit Wasser bei Umgebungstemperatur noch zähplastisch verformbar ist, jedoch nach der Vernetzung des reaktiven Schmelzklebstoffes gummielastische bis zähelastische Eigenschaften erlangt. Der entsprechende reaktive Schmelzklebstoff sollte also in etwa die gleichen anwendungstechnischen Eigenschaften aufweisen, wie der in der europäischen Patentveröffentlichung Nr. 0 244 608 beschriebene reaktive Schmelzklebstoff auf Basis eines Polymermaterials mit freien Isocyanatgruppen und eines Thixotropierungsmittels, jedoch nicht die Nachteile bezüglich der möglichen Toxizität von Produkten mit freien Isocyanatgruppen aufweisen.

Ueberraschenderweise hat es sich gezeigt, dass diese Vorteile erreichbar sind, indem man einem reaktiven Schmelzklebstoff, der aufgrund seines Gehaltes an Di- oder Trialkoxysilylgruppen beim Kontakt mit Wasser vernetzbar ist, ein Thixotropierungsmittel, ausgewählt aus einer bestimmten Klasse an Thixotropierungsmitteln, einverleibt.

### BESCHREIBUNG DER ERFINDUNG

Gegenstand der vorliegenden Erfindung ist ein reaktiver thixotropierter Schmelzklebstoff, der Di- oder Trialkoxysilylgruppen enthält, die beim Kontakt mit Wasser eine Vernetzung des reaktiven Schmelzklebstoffes unter Erlangung gummielastischer Eigenschaften gewährleisten und wobei der Schmelzklebstoff ein thermoplastisches markomolekulares Material enthält, wobei dieser reaktive Schmelzklebstoff dadurch gekennzeichnet ist, dass er
wenigstens ein Thixotropierungsmittel enthält, das aus der Gruppe bestehend aus Bentonen, Russ, Kieselsäuren, gefällten Kreiden, Polyvinylchlorid und Harnstoffderivaten ausgewählt ist,
und dass das im Schmelzklebstoff enthaltene thermoplastische Material aus der Gruppe ausgewählt ist, die Polyamidharze, Polyolefine, Polyacrylate, Poly(meth)acrylate und Polyurethane umfasst, wobei entweder
das thermoplastische Material die reaktiven Di- oder Trialkoxysilylgruppen enthält oder
das thermoplastische Material frei von Di- oder Trialkoxysilylgruppen ist und zusätzlich zu dem thermoplastischen Material wenigstens ein Bindemittel enthalten ist, welches ein von Isocyanatgruppen freies Di- oder Trialkoxysilylgruppen enthaltendes Polyurethan ist,
und dass der reaktive Schmelzklebstoff vor seiner Vernetzung mit Wasser bei Umgebungstemperatur noch zähplastisch verformbar ist.

Gemäss einer bevorzugten Ausführungsart enthält der erfindungsgemässe reaktive Schmelzklebstoff ein solches thermoplastisches Material mit reaktiven Di- oder Trialkoxysilylgruppen, das ein Polyurethan ist, welches aus den folgenden Einzelkomponenten aufgebaut ist:
A) wenigstens einem Isocyanatgruppen enthaltenden Polyurethanpräpolymeren, und
B) wenigstens einer mit Isocyanatgruppen reagierenden Di- oder Trialkoxysilylgruppen enthaltenden Verbindung und/oder
C) gegebenenfalls wenigstens einem Kettenverlängerer.

In diesen bevorzugten reaktiven Schmelzklebstoffen sind die in Punkt A) erwähnten Polyurethanpräpolymeren vorzugsweise aus den folgenden Einzelkomponenten aufgebaut:
a) aromatischen Diisocyanaten und/oder
b) aliphatischen oder cycloaliphatischen Diisocyanaten, und
c) Polyolen mit einem Molekulargewichtsbereich von 400 bis 10'000, vorzugsweise von 1'000 bis 5'000, mit jeweils wenigstens zwei endständigen primären und/oder sekundären OH-Gruppen,
d) kurzkettigen Diolen mit endständigen primären und/oder sekundären OH-Gruppen, die aus der Gruppe ausgewählt sind, welche Ethylenglykol, Hexandiol-1,6, Propylenglykol, Hexapropylenglykol, Diethylenglykol und Hexaethylenglykol umfasst und/oder
e) Vernetzern, die aus der Gruppe ausgewählt sind, welche Trimethylolpropan, Glyzerin, Hexantriol, Triethanolamin, Sorbit, Mannit, Sucrose, Ethylendiamin, Ethanolamin, Hexamethylendiamin und Pentaerythrit umfasst.

Des weiteren sind in diesen bevorzugten reaktiven Schmelzklebstoffen die unter Punkt B) erwähnten Verbindungen vorzugsweise ausgewählt aus Dialkoxysilanen und/oder aus Trialkoxysilanen und/oder Di- oder Trialkoxysilylgruppen enthaltenden Verbindungen, die durch Umätherung der Silylgruppen der oben erwähnten Di- oder Trialkoxysilane mit wenigstens einer H-aktiven Verbindung gemäss den oben genannten Verbindungen der Punkte c), d) oder e) erhältlich sind.

Des weiteren sind in dieser bevorzugten Klasse an reaktiven Schmelzklebstoffen die unter Punkt C) erwähnten Kettenverlängerer, vorzugsweise ausgewählt aus niedermolekularen, wenigstens di-H-aktiven Verbindungen, und speziell bevorzugt aus di-H-aktiven Verbindungen.

Gemäss einer anderen bevorzugten Ausführungsart der erfindungsgemässen reaktiven Schmelzklebstoffe, ist das in ihnen enthaltene thermoplastische Material frei von Di- oder Trialkoxysilylgruppen, und in diesem Falle ist dieses thermoplastische Material vorzugsweise ein Polyurethan, welches aus folgenden Einzelkomponenten aufgebaut ist:
a) aromatischen Diisocyanaten und/oder
b) aliphatischen oder cycloaliphatischen Diisocyanaten und
c) Polyolen mit einem Molekulargewichtsbereich von 400 bis 10'000, vorzugsweise 1'000 bis 5'000 mit jeweils endständigen primären und/oder sekundären OH-Gruppen, wobei die OH-Funktionalität vorzugsweise im Bereich um 2 liegt, und/oder
d) kurzkettigen Diolen mit endständigen primären und/oder sekundären OH-Gruppen, die aus der Gruppe ausgewählt sind, die Ethylenglykol, Hexandiol-1-6, Propylenglykol, Hexapropylenglykol, Diethylenglykol und Hexaethylenglykol umfasst.

Wenn das in den erfindungsgemässen reaktiven thixotropierten Schmelzklebstoffen enthaltene thermoplastische Material, gemäss der oben erwähnten Ausführungsart, frei von Di- oder Trialkoxysilylgruppen ist, dann muss dieser reaktive Schmelzklebstoff, wie bereits erwähnt wurde, zusätzlich zu dem thermoplastischen Material ein Bindemittel enthalten, welches ein von Isocyanatgruppen freies Di- oder Trialkoxysilylgruppen enthaltendes Polyurethan ist.

Speziell bevorzugt werden in diesen reaktiven Schmelzklebstoffen solche Polyurethane eingesetzt, welche aus den folgenden Einzelkomponenten aufgebaut sind:
A) wenigstens einem Isocyanatgruppen enthaltenden Polyurethanpräpolymeren und
B) wenigstens einer mit Isocyanatgruppen reagierenden Di- oder Trialkoxysilylgruppen enthaltenden Verbindung, wobei
   das Di- oder Trialkoxysilylgruppen enthaltende Bindemittel frei von Isocyanatgruppen ist.

Speziell bevorzugt sind dabei die
in Punkt A) erwähnten Polyurethanpräpolymeren aus den folgenden Einzelkomponenten aufgebaut:
a) aromatischen Diisocyanaten und/oder
b) aliphatischen oder cycloaliphatischen Diisocyanaten und
c) Polyolen mit einem Molekulargewichtsbereich von 400 bis 10'000, vorzugsweise 1'000 bis 5'000, mit jeweils wenigstens zwei endständigen primären und/oder sekundären OH-Gruppen,
d) kurzkettigen Diolen mit endständigen primären und/oder sekundären OH-Gruppen, die aus der Gruppe ausgewählt sind, die Ethylenglykol, Hexandiol-1,6, Propylenglykol, Hexapropylenglykol, Diethylenglykol und Hexaethylenglykol umfasst und/oder
e) Vernetzern, die aus der Gruppe ausgewählt sind, welche Trimethylolpropan, Glyzerin, Hexantriol, Triethanolamin, Sorbit, Mannit, Sucrose, Ethylendiamin, Ethanolamin, Hexamethylendiamin und Pentaerythrit umfasst,
   und ferner sind die
   in Punkt B) erwähnten Verbindungen vorzugsweise ausgewählt aus
   Dialkoxysilanen und/oder aus
   Trialkoxysilanen und/oder aus
   Di- oder Trialkoxysilylgruppen enthaltenden Verbindungen, die durch Umätherung der Silylgruppen der oben erwähnten Di- oder Trialkoxysilane mit wenigstens einer H-aktiven Verbindung gemäss Komponente A), Punkte c), d) oder e) erhältlich sind.

Sowohl die Polyurethanpräpolymeren, die das bevorzugte Grundmaterial der thermoplastischen Materialien mit reaktiven Di- oder Trialkoxysilylgruppen darstellen, als auch die bevorzugten Bindemittel auf Basis von Polyurethanen, die Di- oder Trialkoxysilylgruppen enthalten, sind also aus den weiter vorne angegebenen Komponenten A) und B) aufgebaut, wobei die jeweils in Punkt A) erwähnten Polyurethanpräpolymeren vorzugsweise aus den weiter vorne erwähnten Einzelkomponenten a), b), c) und d) aufgebaut sind, und auch im Falle der Verwendung eines thermoplastischen Materials, das frei von Di- oder Trialkoxysilylgruppen ist, ist dieses vorzugsweise ein Polyurethan, welches aus den weiter vorne definierten Einzelkomponenten a), b), c) und d) aufgebaut ist.

In all diesen Fällen sind Beispiele für aromatische Diisocyanate der Gruppe a) die folgenden Diisocyanate:
4,4'-Diphenylmethandiiosocyanat, 2,4-Toluoldiisocyanat, Naphthylen-1,5-diisocyanat, 1,3-und 1,4-Phenylendiisocyanat, Triphenylmethan-4,4', 4''-triisocyanat und Polyphenyl-polymethylenpolyisocyanat.

Des weiteren sind in all diesen genannten Fällen Beispiele für aliphatische oder cycloaliphatische Diisocyanate der Gruppe b) Hexamethylen-diisocyanat, 1,12-Dodecandiisocyanat, Cyclobutan-1,3-diisocyanat, Cyclohexan-1,3- und 1,4-diisocyanat, 1-Isocyanato-3,3,5-trimethyl-5-isocyanatomethylcyclohexan, 2,4- und 2,6-Hexahydrotoluylen-diisocyanat, Hexahydro-1,3- und 1,4-phenyldiisocyanat, Perhydro-2,4'- und 4,4-diphenylmethandiisocyanat.

In allen diesen Fällen sind als Komponente c), nämlich als Polyole mit einem Molekulargewichtsbereich von 400 bis 10'000, vorzugsweise 1'000 bis 5'000, die jeweils mindestens zwei endständige primäre und/oder sekundäre OH-Gruppen aufweisen, wobei solche mit zwei endständigen OH-Gruppen bevorzugt sind, die entsprechenden linearen oder verzweigten Produkte verwendbar, die aus der folgenden Klasse an Verbindungen ausgewählt sind:
- Polybutadienen,
- Polycarbonaten,
- Polycaprolactonen,
- Polycaprolactamen,
- Polyäthern, beispielsweise Polyäthylenoxide, Polypropylenoxide, Polybutylenoxide, Polystyroloxide, Polyepichlorhydrine, Polytetrahydrofurane,
- Polyestern, beispielsweise beliebige Kondensationsprodukte von mehrwertigen Alkoholen - z.B. Aethylenglycol, Propylenglykol-1,2 und -1,3, Butylenglykol-1,4 und -2,3, Hexandiol-1,6, Octandiol-1,8, Glycerin, Trimethylolpropan, Pentaerythrit, Chinit, Mannit und Sorbit, Methylglycosid, Diäthylenglykol, Polyäthylenglykole, Dipropylenglykol, Polypropylenglykole - mit mehrwertigen Carbonsäuren und/oder Carbonsäureanhydriden und/oder Carbonsäureestern, - z.B. Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Tetrachlorphthalsäureanhydrid, Glutarsäureanhydrid, Maleinsäureanhydrid, Fumarsäure, Terephthalsäuredimethylester und Terephthalsäure-bis-glykolester.

Die, kurzkettige Diole mit endständigen primären und/oder sekundären OH-Gruppen, die als Komponente d) in den erwähnten Fällen angeführt sind, müssen aus den bereits genannten Produkten ausgewählt sein.

Zusätzlich zu den Polyolen der Komponenten c) und d) oder anstelle derselben, können als Komponente e) Vernetzer eingesetzt werden, die aus der Gruppe der bereits genanntan Verbindungen ausgewählt sind.

Als Beispiele für Komponenten B), nämlich für mit Isocyanatgruppen reagierende Dialkoxy oder Trialkoxysilylgruppen enthaltende Verbindungen, die zur Herstellung der entsprechenden thermoplastischen Materialien auf Basis von Polyurethanen mit Di- oder Trialkoxysilylgruppen, beziehungsweise zur Herstellung von Bindemitteln auf Polyurethanbasis mit Di- oder Trialkoxysilylgruppen herangezogen werden können, seien die folgenden Produkte genannt:
Als Beispiels für Dialkoxysilane:
3-Aminopropylmethyl-dimethoxysilan,
3-Aminopropylmethyl-diäthoxysilan,
N-Aminoäthyl-3-aminopropyl-methyl-dimethoxysilan,
3-Mercaptopropyl-methyl-dimethoxysilan
und
3-Mercaptopropyl-methyl-diäthoxysilan.

Als Beispiele für Trialkoxysilane:
3-Aminopropyl-trimethoxysilan,
3-Aminopropyl-triäthoxysilan,
3-Mercaptopropyl-trimethoxysilan,
3-Mercaptopropyl-triäthoxysilan,
N-Methyl-3-aminopropyl-trimethoxysilan,
3-Amino-propylmethyl-diäthoxysilan,
N-Aminoäthyl-3-aminopropylmethyl-dimethoxysilan und
3-Glycidoloxypropyl-trimethoxysilan.

Wie bereits erwähnt, können zu diesem Zweck auch Verbindungen eingesetzt werden, die durch Umätherung der Silylgruppen der oben erwähnten Di- oder Trialkoxysilane mit wenigstens einer H-aktiven Verbindung gemäss den vorhin erwähnten Punkten c), d) oder e) erhältlich sind.

Falls bei der Herstellung der entsprechenden Polyurethane ein Kettenverlängerer verwendet wird, der eine niedrigmolekulare Verbindung mit wenigstens zwei aktiven Wasserstoffatomen und vorzugsweise zwei aktiven Wasserstoffatomen darstellt, wie sie unter Punkt C) erwähnt sind, dann sind zu diesem Zweck beispielsweise die folgenden Verbindungen verwendbar:
Aethylenglykol, Hexandiol-1,6, Propylenglykol, Hexapropylenglykol, Diäthylenglykol, Hexaäthylenglykol, N-Methyläthanolamin, N-Aethyläthanolamin, 2-Mercaptoäthanol, Natriumchlorid-Komplex von p,p-Methylen-dianilin, der bei Temperaturen oberhalb von 80°C in die chemisch reaktive Form übergeführt wird, beispielsweise das Produkt mit der Markenbezeichnung Caytur 21®.

Die erfindungsgemässen reaktiven Schmelzklebstoffe können noch zusätzliche Bestandteile enthalten. Bevorzugte derartige reaktive Schmelzklebstoffe enthalten zusätzlich noch
wenigstens einen Weichmacher, vorzugsweise in einer Menge von 2 bis 30 Gew.-%, insbesondere in einer Menge von 5 bis 10 Gew.-%, ausgewählt aus der Gruppe bestehend aus Phthalaten, wie etwa Dibutyl-, Dioctyl-, Dicyclohexyl-, Diisooctyl-, Diisodecyl-, Dibenzyl- oder Butylbenzylphthalat, Phosphaten mit bis zu 8 C-Atomen im Alkylrest, wie Trioctylphosphat; epoxyhaltige Weichmacher, Toluolsulfonamiden, Chlorparaffinen, Adipinsäureestern und Rizinusölen und/oder
- wenigstens einen nicht als Thixotropierungsmittel wirksamen Füllstoff, vorzugsweise in einer Menge von 5 bis 50 Gew.-%, insbesondere in einer Menge von 8 bis 15 Gew.-%, ausgewählt aus der Gruppe, bestehend aus Kieselsäurederivaten, Gips, Talkum, Aktivkohle, Metallpulvern, Kreiden, Kaolinen und Russen und/oder
- wenigstens einem Zusatzstoff, vorzugsweise in einer Menge von 0,001 bis 5 Gew.-%, ausgewählt aus:
   a) Haftvermittlern, insbesondere Silanhaltige Verbindungen, welche zusätzlich noch wenigstens eine reaktive Gruppe, wie Epoxy- Isocyanat-, Amin- oder Doppelbindungsgruppen, enthalten können,
   b) Farbstoffen oder Pigmenten,
   c) üblichen Polyurethankatalysatoren, wie Blei- und/oder Zinnverbindungen, gegebenenfalls unter Mitverwendung weiterer Polyurethankatalysatoren, insbesondere von tert. Amin-haltigen Katalysatoren,
   d) UV-Absorptionsmitteln oder Stabilisatoren, wie phenolische Antioxidantien und Lichtschutzmittel,
   e) oberflächenaktiven Zusatzstoffen, wie Emulgatoren,
   f) Flammschutzmitteln, und
   g) fungistatisch und/oder bakteriostatisch wirkenden Substanzen,
      wobei sich die genannten Prozentangaben auf den gesamten Schmelzklebstoff beziehen.

Ein weiterer Gegenstand der vorliegenden Erfindung ist ein Verfahren zur Herstellung des erfindungsgemässen thixotropierten reaktiven Schmelzklebstoffes, das dadurch gekennzeichnet ist, dass man unter wasserfreien Bedingungen entweder
a) ein thermoplastisches Di- oder Trialkoxysilylgruppen enthaltendes Material vorlegt oder es in situ vor oder nach der Hinzugabe von weiteren Komponenten erzeugt, und danach beim Erweichungspunkt das Thixotropierungsmittel homogen einmischt, oder
b) wenigstens ein Isocyanatgruppen und Di- oder Trialkyloxysilylgruppen enthaltendes Material mit wenigstens einem Thixotropierungsmittel vermischt, danach wenigstens eine mindestens di-H-aktive Verbindung hinzugibt und die Isocyanatgruppen in sito umsetzt, oder
c) ein thermoplastisches, keine Silylgruppen enthaltendes Material vorlegt oder es in situ erzeugt, danach beim Erweichungspunkt wenigstens ein Bindemittel, welches ein Di- oder Trialkoxysilylgruppen enthaltendes Polyurethan ist, das frei von Isocyanatgruppen ist und ferner das Thixotropierungsmittel homogen einmischt, und
   die gemäss obigen Varianten a)bis c) hergestellten Gemische auf Umgebungstemperatur erkalten lässt und der erhaltene reaktive Schmelzklebstoff bei dieser Temperatur zähplastisch verformbar ist.

Des weiteren betrifft die vorliegende Erfindung die Verwendung des erfindungsgemässen thixotropierten reaktiven Schmelzklebstoffes zum Verkleben und/oder Abdichten von einem oder mehreren Materialien gleicher oder ungleicher Beschaffenheit zu einem Verbund.

Vorzugsweise sind dabei die zu verklebenden und/oder abzudichtenden Materialien ausgewählt aus der Gruppe, bestehend aus
- Glas, insbesondere Fahrzeugscheiben, Verbundglasscheiben, Fassadenverglasungen,
- Metall, welches lackiert, metallisiert oder sonstwie beschichtet und/oder vorbehandelt sein kann, z.B. Fahrzeugkarosserien,
- Kunststoff,
- Baumaterialien, insbesondere Steine, Beton, Mörtel, Strassenbeläge, und
- Holz.

Gemäss einer bevorzugten Verwendungsart wird der reaktive Schmelzklebstoff am Applikationsort mittels einer Verarbeitungsvorrichtung, beispielsweise mittels einer Kartusche, welche beheizbar ist oder vorgewärmt worden ist, oder mittels einer Schmelzklebstoff-Applikationsanlage, bei einer für die Aufbringungen geeigneten, in der Nähe des Erweichungspunktes liegenden Temperatur auf die zu verklebenden und/oder abzudichtenden Materialien aufgebracht.

Wie bereits erwähnt wurde, ist der erfindungsgemässe reaktive Schmelzklebstoff lagerfähig, sofern durch eine wasserdichte Verpackung verhindert wird, dass durch den Zutritt von Wasser die Vernetzung der Di- oder Trialkoxysilylgruppen des reaktiven Schmelzklebstoffes mit Wasser stattfindet.

Gemäss einer anderen bevorzugten Verwendungsart der erfindungsgemässen Schmelzklebstoffe wird dieser bei der für die Verarbeitung nötigen erhöhten Temperatur zu einem Klebeprofil beliebiger Form extrudiert, beispielsweise einer Schnur oder einem Band. Allenfalls kann in ein derartiges Klebeprofil in Form einer Schnur oder eines Bandes ein Faden oder ein Gitter zur Gewährleistung der Dimensionsstabilität einverleibt werden.

Diese vorgeformten reaktiven Klebeprofile, beispielsweise entsprechende reaktive Schnüre, können schneckenförmig aufgerollt und in einem Aluminiumbeutel als Wasserdampfbarriere lagerungsfähig verpackt werden. Derartige Produkte finden somit auch Eingang im Do-it-yourself-Markt.

Zur Verklebung kann die Applikation dieser vorgeformten Schnüre ohne maschinellen Aufwand durch Auflegen von Hand erfolgen und ist im Vergleich zum Aufwand bei pastösen Materialien weit kostengünstiger, qualitätssicherer, schnell und sauberer. Sobald dann nach der Applikation dieser reaktive Schmelzklebstoff mit der Luftfeuchtigkeit der Umgebung in Berührung kommt, erfolgt die Vernetzung, und das Produkt erlangt nach und nach gummielastische bis zähelastische Eigenschaften.

Die nachfolgenden Ausführungsbeispiele dienen der Illustration der Erfindung. Die Angabe der Teile beziehen sich auf das Gewicht.

### Ausführungsbeispiel 1

### 1. Beschreibung der Herstellung des Polyurethanthermoplastes

In einer Mischung aus 2400 Teilen eines Polyoxypropylenetherdiols vom Molekulargewicht 2000 und 580 Teilen Diisodecylphthalat werden bei Raumtemperatur 641,8 Teile 4,4'-Diphenylmethan-diisocyanat suspendiert und die Suspension unter Rühren und Luftfeuchtigkeitsausschluss auf 80°C erwärmt, wobei das kristalline 4,4'-Diphenylmethandiisocyanat in Lösung geht.

Nach ca. 150 Minuten werden 114,1 Teile 1,4-Butandiol zugegeben und die Reaktionsmischung nach Temperaturerhöhung auf ca. 100°C bis zur Konsistenz des Isocyanatgehaltes, ca. 1 Stunde, gerührt.

### 2. Beschreibung-der Herstellung des reaktiven Schmelzklebstoffes

Bei einer Temperatur von 100°C werden zum oben beschriebenen Thermoplast nacheinander 1100 Teile eines Silan-Bindemittels, das aus den Komponenten Polyoxypropylenetherdiol vom Molekulargewicht von 2000 und 4,4'-Diphenylmethandiisocyanat aufgebaut ist, mit einem NCO-Gehalt 1,0 %, abgeblockt mit 55 Teilen Dynasilan 1110 (N-Methyl-3-aminopropyltrimethoxysilan) und 490 Teile bei 130°C getrockneter Russ und 4,8 Teile Niax D 22 (Dibutylzinndilaurat) eingemischt. Diese so hergestellte, nicht fädige Masse ist bei der Herstellungstemperatur leicht klebrig und standfest und bei Raumtemperatur gut anfassbar und plastisch verformbar.

Folgende analytische Daten wurden nach 2-wöchiger Lagerung der Masse bei 23°C und 50% relativer Luftfeuchtigkeit ermittelt:

| | |
|---|---|
| Härte Shore A | 30 (DIN 53505) |
| Zugfestigkeit [N/mm²] | 2,2 (DIN 53504) |
| Bruchdehnung [%] | 350 (DIN 53504) |
| Bruchspannung [N/mm²] | 2,2 (DIN 53504) |
| Weiterreissfestigkeit [N/mm²] | 6,2 (DIN 53515) |
| offene Liegezeit der Raupen | ca. 1/2 Std. |
| Gebrauchstemperatur | -40°C bis +90°C (temporär bis +150°C) |

### Ausführungsbeispiel 2

In einer Mischung aus 2400 Teilen eines Polyoxypropylenetherdiols vom Molekulargewicht 2000 und 580 Teilen Diisodecylphthalat werden bei Raumtemperatur 641,8 Teile 4,4'-Diphenylmethan-diisocyanat suspendiert und die Suspension unter Rühren und Luftfeuchtigkeitsausschluss auf 80°C erwärmt, wobei das kristalline 4,4'-Diphenylmethandiisocyanat in Lösung geht.

Nach ca. 150 Minuten werden 97,3 Teile 1,4-Butandiol zugegeben und die Reaktionsmischung nach Temperaturerhöhung auf ca. 100°C bis zur Konsistenz des Isocyanatgehaltes, ca. 1 Stunde, gerührt.

Bei einer Temperatur von 100°C werden nacheinander 53,5 Teile Dynasilan 1110 (N-Methyl-3-aminopropyltrimethoxysilan) und 250 Teile bei 130°C getrockneter Russ und 2,5 Teile Niax D 22 (Dibutylzinndilaurat) eingemischt. Diese so hergestellte,nicht fädige Masse ist bei der Herstellungstemperatur leicht klebrig und standfest und bei Raumtemperatur gut anfassbar und plastisch verformbar.

Folgende analytische Daten wurden nach 2-wöchiger Lagerung der Masse bei 23°C und 50 % relativer Luftfeuchtigkeit ermittelt:

| | |
|---|---|
| Härte Shore A | 45 (DIN 53505) |
| Zugfestigkeit [N/mm²] | 5,8 (DIN 53504) |
| Bruchdehnung [%] | 580 (DIN 53504) |
| Bruchspannung [N/mm²] | 5,8 (DIN 53504) |
| Weiterreissfestigkeit [N/mm²] | 9,4 (DIN 53515) |
| offene Liegezeit der Raupen | ca. 1/2 Std. |
| Gebrauchstemperatur | -40°C bis +90°C (temporär bis +150°C) |

## Patentansprüche

1. Reaktiver thixotropierter Schmelzklebstoff, der Di- oder Trialkoxysilylgruppen enthält, die bei Kontakt mit Wasser eine Vernetzung des reaktiven Schmelzklebstoffes unter Erlangung gummielastischer Eigenschaften gewährleisten und wobei der Schmelzklebstoff ein thermoplastisches makromolekulares Material enthält, dadurch gekennzeichnet, dass der reaktive Schmelzklebstoff
wenigstens ein Thixotropierungsmittel enthält, das aus der Gruppe bestehend aus Bentonen, Russ, Kieselsäuren, gefällten Kreiden, Polyvinylchlorid und Harnstoffderivaten ausgewählt ist,
und dass das im Schmelzklebstoff enthaltene thermoplastische Material aus der Gruppe ausgewählt ist, die Polyamidharze, Polyolefine, Polyacrylate, Poly(meth)acrylate und Polyurethane umfasst, wobei entweder
das thermoplastische Material die reaktiven Di- oder Trialkoxysilylgruppen enthält oder
das thermoplastische Material frei von Di- oder Trialkoxysilylgruppen ist und zusätzlich zu dem thermoplastischen Material wenigstens ein Bindemittel enthalten ist, welches ein von Isocyanatgruppen freies Di- oder Trialkoxysilylgruppen enthaltendes Polyurethan ist,
und dass der reaktive Schmelzklebstoff vor seiner Vernetzung mit Wasser bei Umgebungstemperatur noch zähplastisch verformbar ist.

2. Reaktiver Schmelzklebstoff nach Anspruch 1, dadurch gekennzeichnet, dass er ein thermoplastisches Material mit reaktiven Di- oder Trialkoxysilylgruppen enthält, das ein Polyurethan ist, welches aus den folgenden Einzelkomponenten aufgebaut ist:
A) wenigstens einem Isocyanatgruppen enthaltenden Polyurethanpräpolymeren, und
B) wenigstens einer mit Isocyanatgruppen reagierenden Di- oder Trialkoxysilylgruppen enthaltenden Verbindung und/oder
C) gegebenenfalls wenigstens einem Kettenverlängerer.

3. Reaktiver Schmelzklebstoff nach Anspruch 2, dadurch gekennzeichnet, dass die in Punkt A) erwähnten Polyurethanpräpolymeren aus den folgenden Einzelkomponenten aufgebaut sind:
a) aromatischen Diisocyanaten und/oder
b) aliphatischen oder cycloaliphatischen Diisocyanatan, und
c) Polyolen mit einem Molekulargewichtsbereich von 400 bis 10'000, vorzugsweise von 1'000 bis 5'000, mit jeweils wenigstens zwei endständigen primären und/oder sekundären OH-Gruppen,
d) kurzkettigen Diolen mit endständigen primären und/oder sekundären OH-Gruppen, die aus der Gruppe ausgewählt sind, welche Ethylenglykol, Hexandiol-1,6, Propylenglykol, Hexapropylenglykol, Diethylenglykol und Hexaethylenglykol umfasst und/oder
e) Vernetzern, die aus der Gruppe ausgewählt sind, welche Trimethylolpropan, Glyzerin, Hexantriol, Triethanolamin, Sorbit, Mannit, Sucrose, Ethylendiamin, Ethanolamin, Hexamethylendiamin und Pentaerythrit umfasst.

4. Reaktiver Schmelzklebstoff nach Anspruch 2 oder 3, dadurch gekennzeichnet, dass die in Anspruch 2, Punkt B) erwähnten Verbindungen ausgewählt sind aus Dialkoxysilanen und/oder aus Trialkoxysilanen und/oder Di- oder Trialkoxysilylgruppen enthaltenden Verbindungen, die durch Umätherung der Silylgruppen der oben erwähnten Di- oder Trialkoxysilane mit wenigstens einer H-aktiven Verbindung gemäss Anspruch 3, Punkt c), d) oder e) erhältlich sind.

5. Reaktiver Schmelzklebstoff nach einem der Ansprüche 2 bis 4, dadurch gekennzeichnet, dass die in Anspruch 2, Punkt C) erwähnten Kettenverlängerer ausgewählt sind aus niedermolekularen, wenigstens di-H-aktiven Verbindungen, vorzugsweise di-H-aktiven Verbindungen.

6. Reaktiver Schmelzklebstoff nach Anspruch 1, dadurch gekennzeichnet, dass das thermoplastische Material frei von Di- oder Trialkoxysilylgruppen ist und dass dieses thermoplastische Material ein Polyurethan ist, welches aus folgenden Einzelkomponenten aufgebaut ist:
a) aromatischen Diisocyanaten und/oder
b) aliphatischen oder cycloaliphatischen Diisocyanaten und
c) Polyolen mit einem Molekulargewichtsbereich von 400 bis 10'000, vorzugsweise 1'000 bis 5'000, mit jeweils endständigen primären und/oder sekundären OH-Gruppen, wobei die OH-Funktionalität vorzugsweise im Bereich um 2 liegt, und/oder
d) kurzkettigen Diolen mit endständigen primären und/oder sekundären OH-Gruppen, die aus der Gruppe ausgewählt sind, die Ethylenglykol, Hexandiol-1,6, Propylenglykol, Hexapropylenglykol, Diethylenglykol und Hexaethylenglykol umfasst.

7. Reaktiver Schmelzklebstoff nach Anspruch 1 oder 6, dadurch gekennzeichnet, dass das wenigstens eine Bindemittel ein Di- oder Trialkoxysilylgruppen enthaltendes Polyurethan ist, welches aus den folgenden Einzelkomponenten aufgebaut ist:
A) wenigstens einem Isocyanatgruppen enthaltenden Polyurethanpräpolymeren und
B) wenigstens einer mit Isocyanatgruppen reagierenden Di- oder Trialkoxysilylgruppen enthaltenden Verbindung.

8. Reaktiver Schmelzklebstoff nach Anspruch 7, dadurch gekennzeichnet, dass die in Punkt A) erwähnten Polyurethanpräpolymeren aus den folgenden Einzelkomponenten aufgebaut sind:
a) aromatischen Diisocyanaten und/oder
b) aliphatischen oder cycloaliphatischen Diisocyanaten und
c) Polyolen mit einem Molekulargewichtsbereich von 400 bis 10'000, vorzugsweise 1'000 bis 5'000, mit jeweils wenigstens zwei endständigen primären und/oder sekundären OH-Gruppen,
d) kurzkettigen Diolen mit endständigen primären und/oder sekundären OH-Gruppen, die aus der Gruppe ausgewählt sind, die Ethylenglykol, Hexandiol-1,6, Propylenglykol, Hexapropylenglykol, Diethylenglykol und Hexaethylenglykol umfasst und/oder
e) Vernetzern, die aus der Gruppe ausgewählt sind, welche Trimethylolpropan, Glyzerin, Hexantriol, Triethanolamin, Sorbit, Mannit, Sucrose, Ethylendiamin, Ethanolamin, Hexamethylendiamin und Pentaerythrit umfasst, und/oder dass die
in Punkt B) erwähnten Verbindungen ausgewählt sind aus
Dialkoxysilanen und/oder aus
Trialkoxysilanen und/oder aus
Di- oder Trialkoxysilylgruppen enthaltenden Verbindungen, die durch Umätherung der Silylgruppen der oben erwähnten Di- oder Trialkoxysilane mit wenigstens einer H-aktiven Verbindung gemäss Komponente A), Punkte c), d) oder e) erhältlich sind.

9. Reaktiver Schmelzklebstoff nach einem der Ansprüche 1 bis 8, dadurch gekennzeichnet, dass er zusätzlich noch
- wenigstens einen Weichmacher, vorzugsweise in einer Menge von 2 bis 30 Gew.-%, insbesondere in einer Menge von 5 bis 10 Gew.-%, ausgewählt aus der Gruppe bestehend aus Phthalaten, wie etwa Dibutyl-, Dioctyl-, Dicyclohexyl-, Diisooctyl-, Diisodecyl-, Dibenzyl- oder Butylbenzylphthalat, Phosphaten mit bis zu 8 C-Atomen im Alkylrest, wie Trioctylphosphat; epoxyhaltige Weichmacher, Toluolsulfonamiden, Chlorparaffinen, Adipinsäureestern und Rizinusölen und/oder
- wenigstens einen nicht als Thixotropierungsmittel wirksamen Füllstoff, vorzugsweise in einer Menge von 5 bis 50 Gew.-%, insbesondere in einer Menge von 8 bis 15 Gew.-%, ausgewählt aus der Gruppe, bestehend aus Kieselsäurederivaten, Gips, Talkum, Aktivkohle, Metallpulvern, Kreiden, Kaolinen und Russen und/oder
- wenigstens einem Zusatzstoff, vorzugsweise in einer Menge von 0,001 bis 5 Gew.-%, ausgewählt aus:
a) Haftvermittlern, insbesondere Silanhaltige Verbindungen, welche zusätzlich noch wenigstens eine reaktive Gruppe, wie Epoxy-, Isocyanat-, Amin- oder Doppelbindungsgruppen, enthalten können,
b) Farbstoffen oder Pigmenten,
c) üblichen Polyurethankatalysatoren, wie Blei- und/oder Zinnverbindungen, gegebenenfalls unter Mitverwendung weiterer Polyurethankatalysatoren, insbesondere von tert. Amin-haltigen Katalysatoren,
d) UV-Absorptionsmitteln oder Stabilisatoren, wie phenolische Antioxidantien und Lichtschutzmitteln,
e) oberflächenaktiven Zusatzstoffen, wie Emulgatoren,
f) Flammschutzmitteln, und
g) fungistatisch und/oder bakteriostatisch wirkenden Substanzen
enthält, wobei sich die genannten Prozentangaben auf den gesamten Schmelzklebstoff beziehen.

10. Verfahren zur Herstellung eines reaktiven thixotropierten Schmelzklebstoffes nach einem der Ansprüche 1 bis 9, dadurch gekennzeichnet, dass man unter wasserfreien Bedingungen entweder
a) ein thermoplastisches Di- oder Trialkoxysilylgruppen enthaltendes Material vorlegt oder es in situ vor oder nach der Hinzugabe von weiteren Komponenten erzeugt, und danach beim Erweichungspunkt das Thixotropierungsmittel homogen einmischt, oder
b) wenigstens ein Isocyanatgruppen und Di- oder Trialkoxysilylgruppen enthaltendes Material mit wenigstens einem Thixotropierungsmittel vermischt, danach wenigstens eine mindestens di-H-aktive Verbindung hinzugibt und die Isocyanatgruppen in situ umsetzt, oder
c) ein thermoplastisches, keine Silylgruppen enthaltendes Material vorlegt oder es in situ erzeugt, danach beim Erweichungspunkt wenigstens ein Bindemittel, welches ein Di- oder Trialkoxysilylgruppen enthaltendes Polyurethan ist, das frei von Isocyanatgruppen ist und ferner das Thixotropierungsmittel homogen einmischt, und
die gemäss obigen Varianten a) bis c) hergestellten Gemische auf Umgebungstemperatur erkalten lässt und der erhaltene reaktive Schmelzklebstoff bei dieser Temperatur zähplastisch verformbar ist.

11. Verwendung des reaktiven thixotropierten Schmelzklebstoffes nach einem der Ansprüche 1 bis 9, zum Verkleben und/oder Abdichten von einem oder mehreren Materialien gleicher oder ungleicher Beschaffenheit zu einem Verbund.

12. Verwendung nach Anspruch 11, dadurch gekennzeichnet, dass die zu verklebenden und/oder abzudichtenden Materialien ausgewählt sind aus der Gruppe, bestehend aus
- Glas, insbesondere Fahrzeugscheiben, Verbundglasscheiben, Fassadenverglasungen,
- Metall, welches lackiert, metallisiert oder sonstwie beschichtet und/oder vorbehandelt sein kann, z.B. Fahrzeugkarosserien,
- Kunststoff,
- Baumaterialien, insbesondere Steine, Beton, Mörtel, Strassenbeläge, und
- Holz.

13. Verwendung nach Anspruch 11, dadurch gekennzeichnet, dass der reaktive thixotropierte Schmelzklebstoff am Applikationsort mittels einer Verarbeitungsvorrichtung, beispielsweise mittels einer Kartusche, welche beheizbar ist oder vorgewärmt worden ist, oder mittels einer Schmelzklebstoff-Applikationsanlage, bei einer für die Aufbringungen geeigneten, in der Nähe des Erweichungspunktes liegenden Temperatur auf die zu verklebenden und/oder abzudichtenden Materialien aufgebracht wird.

14. Verwendung nach Anspruch 11, dadurch gekennzeichnet, dass der reaktive thixotropierte Schmelzklebstoff in Form eines Klebeprofils bei Umgebungstemperatur auf die zu verklebenden und/oder abzudichtenden Materialien aufgebracht wird.

15. Verwendung nach Anspruch 14, dadurch gekennzeichnet, dass das Klebeprofil die Form einer Schnur oder eines Bandes hat, wobei zur Gewährleistung der Dimenionsstabilitäten ein Faden oder ein Gitter in die Schnur oder das Band einverleibt sein kann.

## Claims

1. Reactive thixotropic hot-melt adhesive which contains di- or trialkoxy silyl groups which achieve cross-linking of the reactive hot-hot adhesive on contact with water, to arrive at rubbery elastic characteristics and in which the hot-melt adhesive contains a thermoplastic macro-molecular material, characterised in that the reactive hot-melt adhesive
contains at least one thixotropic medium which is selected from the group comprising bentonites, soot, silicic acids, precipitated calcium carbonates, polyvinyl chloride and urea derivatives,
and that the thermoplastic material contained in the adhesive is selected from the group comprising the polyamide resins, polyolefins, polyacrylate, poly(meth) acrylate and polyurethane, in which either
the thermoplastic material contains the reactive di- or trialkoxy silyl groups or
the thermoplastic material is free of di- or trialkoxy silyl groups and in addition to the thermoplastic material at least one binder is contained, which is a polyurethane free of isocyanate groups but contains di- or trialkoxy silyl groups,
and that the reactive adhesive is still viscously plastically deformable at the temperature of its surroundings before it is cross-linked.

2. Reactive hot-melt adhesive according to claim 1, characterised in that it contains a thermoplastic material with reactive di- or trialkoxy silyl groups which is a polyurethane made up of the following individual components:
A) polyurethane pre-polymers containing at least one isocyanate group, and
B) at least one compound containing di- or trialkoxy silyl groups which react with isocyanate groups and/or
C) if necessary at least one chain extender.

3. Reactive hot-melt adhesive according to claim 2, characterised in that the polyurethane pre-polymers referred to at point A) are made up of the following individual components:
a) aromatic diisocyanates and/or
b) aliphatic or cycloaliphatic diisocyanates, and
c) polyols having a molecular weight range of 400 to 10,000 preferably from 1,000 to 5,000, with respectively at least two terminating primary and/or secondary OH groups,
d) short-chain diols with terminating primary and/or secondary OH groups selected from the groups which include ethylene glycol, hexane diol 1,6, propylene glycol, hexapropylene glycol, diethylene glycol and hexaethylene glycol and/or
e) cross-linking agents selected from the group which includes trimethylenepropane glycerine, hexane triol, triethanolamine, sorbite, mannite, sucrose, ethylene diamine, ethanolamine, hexamethylene diamine, and pentaerythrite.

4. Reactive hot-melt adhesive according to claim 2 or 3, characterised in the compounds stated at point B) in claim 2 are selected from dialkoxy silanes and/or trialkoxy silanes and/or compounds containing di- or trialkoxy silyl groups, which can be obtained by etherisation of the silyl groups of the above-mentioned di- or trialkoxy silane with at least one H-active compound according to claim 3, point c), d), or e).

5. Reactive hot-melt adhesive according to one of claims 2 to 4, characterised in that the chain extender stated at point C) in claim 2 is selected from low-molecular at least di-H-active compounds, preferably di-H-active compounds.

6. Reactive hot-melt adhesive according to claim 1, characterised in that the thermoplastic material is free of di- or tri-alkoxy silyl groups and that this thermoplastic material is a polyurethane which is made up of the following individual components:
a) aromatic diisocyanates and/or
b) aliphatic or cycloaliphatic diisocyanates and
c) polyols having a molecular weight range of 400 to 10,000 preferably 1,000 to 5,000 with respective terminating primary and/or secondary OH groups, the OH functionality preferably lying in the range around 2, and/or
d) short-chain diols with terminating primary and/or secondary OH groups selected from the group including ethylene glycol, hexane diol-1,6, propylene glycol, hexapropylene glycol, diethylene glycol and hexaethylene glycol.

7. Reactive hot-melt adhesive according to claim 1 or 6, characterised in that the at least one binder is a polyurethane which contains di- or trialkoxy silyl groups and which is made up of the following individual components:
A) polyurethane pre-polymers containing at least one isocyanate group and
B) at least one compound containing di- or trialkoxy silyl groups which reacts with isocyanate groups.

8. Reactive hot-melt adhesive according to claim 7, characterised in that the polyurethane pre-polymers stated at point A) are made up of the following individual components:
a) aromatic diisocyanates and/or
b) aliphatic or cycloaliphatic diisocyanates and
c) polyols having a molecular weight range of 400 to 10,000 preferably 1,000 to 5,000, with respectively at least two terminating primary and/or secondary OH groups,
d) short-chain diols with terminating primary and/or secondary OH groups which are selected from the group comprising ethylene glycol, hexane diol-1,6, propylene glycol, hexapropylene glycol, diethylene glycol and hexaethylene glycol and/or
e) cross-linking agents which are selected from the group comprising trimethylenepropane glycerine, hexane triol, triethanolamine, sorbite, mannite, sucrose, ethylene diamine, ethanolamine, hexamethylene diamine and pentaerythrite, and/or that the compounds stated at point B) are selected from
dialkoxy silanes and/or from
trialkoxy silanes and/or from
compounds containing di- or trialkoxy silyl groups, which can be obtained by etherisation of the silyl groups of the above-mentioned di- or trialkoxy silane with at least one H-active compound according to component A), points c), d), or e).

9. Reactive hot-melt adhesive according to one of claim 1 to 8, characterised in that it contains in addition
- at least one plasticiser, preferably in a quantity of 2 to 30% by weight, in particular in a quantity of 5 to 10% by weight, selected from the group comprising phthalates such as dibutyl-, dioctyl-, dicyclohexyl-, diisooctyl,-, diisodecyl-, dibenzyl- or butyl benzyl phthalate, phosphates having up to 8 carbon atoms in the alkyl chain, such as trioctyl phosphate; epoxy-containing plasticisers, toluene sulfonamides, chlorparaffins, adipinic acid esters and ricinus oils and/or
- at least one filler which is not active as a thixotropic medium, preferably in a quantity of 5 to 50% by weight, in particular in a quantity of 8 to 15% by weight, selected from the group comprising silicic acid derivatives, gypsum, talc, active carbon, metal powders, calcium carbonates, kaolins and soots and/or
- at least one additive, preferably in a quantity of 0.001 to 5% by weight selected from:
a) adhesion promoters, in particular silane-containing compounds which could in addition contain also at least one reactive group such as epoxy -, isocyanate-, amine- or double-bonded groups,
b) dyes or pigments,
c) the usual polyurethane catalysts, such as lead and/or zinc compounds, if necessary accompanied by further polyurethane catalysts, in particular tertiary amine-containing catalysts,
d) UV-absorbing media or stabilisers such as phenolic anti-oxidants and light-protective media,
e) surface-active additives such as emulsifiers,
f) flame retardants, and
g) fungicidal and/or bacteriostatically acting substances,
the stated percentages relating to the overall quantity of adhesive.

10. Process for the manufacture of a reactive thixotropic hot-melt adhesive according to one of claims 1 to 9, characterised in that, under non-aqueous conditions, one either
a) provides a thermoplastic material containing di- or tri-alkoxy silyl groups or produces it in situ before or after the addition of further components and subsequently mixes it in homogeneously at the softening point of the thixotropic medium, or
b) mixes at least one material containing isocyanate groups and di- or trialkoxy silyl groups with at least thixotropic medium, and then adds at least one at least di-H-active compound and converts the isocyanate groups in situ, or
c) provides a thermoplastic material containing no silyl groups or produces it in situ, thereafter mixes in homogeneously at the softening point at least one binder which is a polyurethane containing di- or trialkoxy silyl groups and which is free of isocyanate groups and furthermore the thixotropic medium, and
allows the mixture produced according to above variants a) to c) to cool to the temperature of the surroundings and the reactive hot-melt adhesive obtained is deformable in a viscous plastic manner at this temperature.

11. The use of the reactive thixotropic hot-melt adhesive according to one of claims 1 to 9, for sticking and/or sealing of one or more materials of the same or different characteristics to form a bond.

12. The use according to claim 11, characterised in that the materials to be stuck together and/or to be sealed are selected from the group comprising
- glass, in particular vehicle windscreens, laminated glass screens, shop-front or patio glazing,
- metal, which can be painted, metallised or otherwise coated and/or pre-treated, e.g. vehicle body work,
- plastics
- constructional materials, in particular stone, concrete, mortar, road surfacings and
- wood.

13. The use according to claim 11, characterised in that the reactive thixotropic hot-melt adhesive is applied at the point of application by means of a pre-treatment device, for example by means of a cartridge which can be heated or is pre-heated or by means of a hot-melt-adhesive-applying installation, at a temperature suitable for the application and lying in the neighbourhood of the softening point, to the materials which are to be stuck together and/or to be sealed.

14. The use according to claim 11, characterised in that the reactive thixotropic hot-melt adhesive is applied to the materials which are to be stuck together and/or sealed in the form of an adhesive profile at the temperature of the surroundings.

15. The use according to claim 14, characterised in that the adhesive profile has the form of a loop or a strip, and wherein a thread or a grid can be incorporated in the loop or the strip to achieve dimensional stability.

## Revendications

1. Colle à fusion ou thermofusible, rendue thixotrope, réactive, qui contient des radicaux dialcoxysilyle ou trialcoxysilyle, qui garantissent une réticulation de la colle à fusion ou thermofusible réactive par contact avec de l'eau tout en lui conférant des propriétés caoutchoutoélastiques c'est-à-dire présentant l' élasticité du caoutchouc et où la colle à fusion ou thermofusible contient une matière thermoplastique macromoléculaire, où cette colle à fusion ou thermofusible réactive est caractérisée en ce que
elle contient au moins un agent de thixotropie qui est choisi dans le groupe constitué par les bentones, la suie ou noir de carbone, des acides siliciques ou silices, des craies précipitées, le poly(chlorure de vinyle) et des dérivés de l'urée,
et en ce que la matière thermoplastique contenue dans la colle à fusion ou thermofusible est choisie dans le groupe formé par les résines de polyamide, les polyoléfines, les polyacrylates, les poly(méth)acrylates et les polyuréthannes, où
la matière thermoplastique contient les radicaux dialcoxysilyle ou trialcoxysilyle réactifs, ou bien
la matière thermoplastique est dépourvue de radicaux dialcoxysilyle ou trialcoxysilyle et,
complémentairement à la matière thermoplastique, la colle à fusion ou thermofusible contient au moins un liant qui est un polyuréthanne dépourvu de radicaux isocyanate, contenant des radicaux dialcoxysilyle ou trialcoxysilyle,
et que la colle à fusion ou thermofusible réactive est encore viscoplastiquement malléable ou faconnable à la température environnante avant sa réticulation avec de l'eau.

2. Colle à fusion réactive suivant la revendication 1, caractérisée en ce qu'elle contient une matière thermoplastique avec des radicaux dialcoxysilyle ou trialcoxysilyle, qui est un polyuréthanne, qui est constitué des composants individuels suivants :
A) au moins un prépolymère polyuréthannique contenant des radicaux isocyanate et
B) au moins un composé contenant des radicaux dialcoxysilyle ou trialcoxysilyle, réagissant avec des groupes isocyanate et/ou
C) éventuellement au moins un agent de prolongement des chaînes.

3. Colle à fusion réactive suivant la revendication 2, caractérisée en ce que les prépolymères polyuréthanniques cités sous le point A) sont constitués des composants individuels qui suivent :
a) des diisocyanates aromatiques et/ou
b) des diisocyanates aliphatiques ou cycloaliphatiques et
c) des polyols d'une plage de poids moléculaires de 400 à 10.000, de préférence de 1.000 à 5.000, avec à chaque fois au moins deux radicaux OH primaires et/ou secondaires terminaux,
d) des diols à courtes chaînes avec des radicaux OH primaires et/ou secondaires terminaux, qui sont choisis dans le groupe formé par l'éthylèneglycol, l'hexanediol-1,6, le propylèneglycol, l'hexapropylèneglycol, le diéthylèneglycol et l'hexaéthylèneglycol et/ou
e) des agents de réticulation qui sont choisis parmi le triméthylolpropane, la glycérine, l'hexanetriol, la triéthanolamine, la sorbite, la mannite, le saccharose, l'éthylènediamine, l'éthanolamine, l'hexaméthylènediamine et la pentaérythrite.

4. Colle à fusion réactive suivant la revendication 2 ou 3, caractérisée en ce que les composés cités sous le point B) dans la revendication 2, sont choisis parmi les dialcoxysilanes et/ou les trialcoxysilanes et/ou les composés contenant des radicaux dialcoxysilyle ou trialcoxysilyle que l'on peut obtenir par la transéthérification des radicaux silyle des dialcoxysilanes ou des trialcoxysilanes susmentionnés avec au moins un composé à hydrogène actif des points c), d) ou e) de la revendication 3.

5. Colle à fusion réactive suivant l'une quelconque des revendications 2 à 4, caractérisée en ce que les agents de prolongement des chaînes cités sous le point C) de la revendication 2, sont choisis parmi les composés de faibles poids moléculaires, à au moins deux hydrogènes actifs, de préférence les composés à deux hydrogènes actifs.

6. Colle à fusion réactive suivant la revendication 1, caractérisée en ce que la matière thermoplastique est dépourvue de radicaux dialcoxysilyle ou trialcoxysilyle et en ce que cette matière thermoplastique est un polyuréthanne, qui est constitué des composants individuels ci-dessous :
a) diisocyanates aromatiques et/ou
b) diisocyanates aliphatiques ou cycloaliphatiques et
c) polyols d'une plage de poids moléculaires de 400 à 10.000, de préférence de 1.000 à 5.000 avec à chaque fois des radicaux OH primaires et/ou secondaires terminaux, où la fonctionnalité OH se situe de préférence dans la plage tournant autour de 2 et/ou
d) diols à courtes chaînes avec des radicaux OH primaires et/ou secondaires terminaux, qui sont choisis dans le groupe formé par l'éthylèneglycol, l'hexanediol-1,6, le propylèneglycol, l'hexapropylèneglycol, le diéthylèneglycol et l'hexaéthylèneglycol.

7. Colle à fusion réactive suivant la revendication 1 ou 6, caractérisée en ce qu'au moins un liant est un polyuréthanne contenant des radicaux dialcoxysilyle ou trialcoxysilyle, qui est choisi parmi les composants individuels qui suivent :
A) au moins un prépolymère polyuréthannique contenant des radicaux isocyanate et
B) au moins un composé contenant des radicaux dialcoxysilyle ou trialcoxysilyle qui réagissent avec des radicaux isocyanate.

8. Colle à fusion réactive suivant la revendication 7, caractérisée en ce que les prépolymères polyuréthanniques cités sous le point A) sont constitués des composants individuels ci-dessous :
a) diisocyanates aromatiques et/ou
b) diisocyanates aliphatiques ou cycloaliphatiques et
c) polyols d'une plage de poids moléculaires de 400 à 10.000, de préférence de 1.000 à 5.000, avec à chaque fois au moins deux radicaux OH primaires et/ou secondaires terminaux,
d) diols à courtes chaînes avec des radicaux OH primaires et/ou secondaires terminaux, qui sont choisis dans le groupe qui comprend l'éthylèneglycol, l'hexanediol-1,6, le propylèneglycol, l'hexapropylèneglycol, le diéthylèneglycol et l'hexaéthylèneglycol et/ou
e) agents de réticulation qui sont choisis dans le groupe comprenant le triméthylolpropane, la glycérine, l'hexanetriol, la triéthanolamine, la sorbite, la mannite, le saccharose, l'éthylènediamine, l'éthanolamine, l'hexaméthylènediamine et la pentaérythrite et/ou en ce que
les composés cités sous le point B) sont de préférence choisis par
les dialcoxysilanes et/ou
les trialcoxysilanes et/ou
les composés contenant des radicaux dialcoxysilyle ou trialcoxysilyle que l'on peut obtenir par la transéthérification des dialcoxysilanes ou des trialcoxysilanes susmentionnés avec au moins un composé à hydrogène actif selon le composant A), point c), d) ou e).

9. Colle à fusion réactive suivant l'une quelconque des revendications 1 à 8, caractérisée en ce qu'elle contient complémentairement encore :
- au moins un plastifiant, de préférence en une proportion de 2 à 30% en poids, plus particulièrement en une proportion de 5 à 10% en poids, choisi dans le groupe formé par les phtalates, comme le phtalate de dibutyle, de dioctyle, de dicyclohexyle, de diisooctyle, de diisodécyle, de dibenzyle, ou de butylbenzyle, des phosphates avec jusqu'à 8 atomes de carbone dans le groupe alkyle, comme le phosphate de trioctyle; des plastifiants contenant des radicaux époxy, des toluènesulfonamides, des chloroparaffines, des esters de l'acide adipique et des huiles de ricin et/ou
- au moins une charge qui possède une activité d' agent de thixotropie, de préférence en une proportion de 5 à 50% en poids, plus particulièrement en une proportion de 8 à 15% en poids, choisi dans le groupe constitué par les dérivés de l'acide silicique, le gypse ou plâtre, le talc, le charbon activé, les poudres de métaux, les craies, les kaolins et les suies ou noirs de carbone et/ou
- au moins un additif, de préférence en une proportion qui varie de 0,001 à 5% en poids, choisi parmi :
a) des agents conférant de l'adhésivité ou agents d'adhésivité, plus spécialement des composés contenant des silanes, qui peuvent complémentairement encore contenir au moins un groupe réactif, comme un radical époxy, isocyanate, amine ou une double liaison,
b) des colorants ou des pigments,
c) des catalyseurs de polyuréthannes habituels, comme des composés à base de plomb et/ou d'étain, éventuellement en recourant à l'utilisation conjointe d' autres catalyseurs de polyuréthannes, plus particulièrement des catalyseurs contenant des amines tertiaires,
d) des agents d'absorption des UV, ou des stabilisateurs, comme des antioxydants phénoliques et des agents photoprotecteurs,
e) des additifs tensioactifs ou surfactifs, comme des émulsifs,
f) des agents ignifugeants ou de protection contre les flammes et
g) des substances à activité fongistatique et/ou bactériostatique,
où les indications en pourcentages se rapportent à la colle thermofusible ou à fusion totale.

10. Procédé de fabrication de la colle de fusion ou thermofusible réactive, rendue thixotrope suivant l'une quelconque des revendications 1 à 9, caractérisé en ce que, dans des conditions exemptes d'eau
a) on prend au préalable une matière thermoplastique contenant des radicaux dialcoxysilyle ou trialcoxysilyle, ou bien on prépare cette dernière in situ, avant ou après l'addition d'autres composants, et on y mélange ensuite l'agent de thixotropie au point de ramollissement, ou bien
b) on mélange au moins une matière contenant des radicaux dialcoxysilyle ou trialcoxysilyle et des radicaux isocyanate à au moins un agent de thixotropie, puis on ajoute au moins un composé à au moins deux atomes d' hydrogène actifs et on fait réagir les radicaux isocyanate in situ, ou bien
c) on se sert au préalable d'une matière thermoplastique ne contenant pas de radicaux silyle, ou bien on l'engendre in situ, puis on incorpore ensuite sous mélange, au point de ramollissement, au moins un liant, qui est un polyuréthanne contenant des radicaux dialcoxysilyle ou trialcoxysilyle, qui est exempt de radicaux isocyanate et ensuite l'agent de thixotropie et
on laisse refroidir les mélanges préparés selon les variantes a) à c) susmentionnées jusqu'à la température ambiante et jusqu'à ce que la colle thermofusible réactive obtenue soit viscoplastiquement façonnable ou malléable à cette température.

11. Utilisation de la colle à fusion ou thermofusible réactive, rendue thixotrope suivant l'une quelconque des revendications 1 à 9, caractérisée en ce qu'en vue du collage et/ou de l'étanchement ou du bouchage d'un ou plusieurs matériaux de nature identique ou différente en un composite.

12. Utilisation suivant la revendication 11,caractérisée en ce que les matières à coller et/ou à boucher ou étancher sont choisis dans le groupe constitué par
- le verre, plus particulièrement des pare-brise ou glaces pour véhicules automobiles, des vitres ou glaces de verre composites, des produits de vitrification de façades,
- de métaux, qui peuvent être peints ou laqués, métallisés, ou revêtus de n'importe quelle manière et/ou prétraités de n'importe quelle manière, par exemple des carrosseries de véhicules automobiles,
- les matières plastiques,
- les matériaux de construction, plus particulièrement des pierres, le béton, le mortier, les revêtements routiers et
- le bois.

13. Utilisation suivant la revendication 11, caractérisée en ce que la colle à fusion rendue thixotrope et réactive à l'endroit d'application, à l'aide d'une installation de mise en oeuvre, par exemple à l'aide d'une cartouche, qui peut être chauffée, ou qui a été chauffée au préalable, ou à l'aide d'une installation d'application de colle thermofusible, à une température qui convient aux applications, à proximité du point de ramollissement, sur les matériaux à coller et/ou à étancher ou boucher.

14. utilisation suivant la revendication 11, caractérisée en ce que la colle à fusion rendue thixotrope, réactive est appliquée sous forme d'un profilé de collage à la température ambiante sur les matériaux à coller et/ou à étancher ou à calfeutrer.

15. Utilisation suivant la revendication 14, caractérisé en ce que le profilé de collage a la forme d'un cordon ou d'une bande, où en vue d'assurer la stabilité dimensionnelle, un fil ou une grille ou treillis peut être incorporé au cordon ou à la bande.
